# EUROPEAN PATENT APPLICATION

(11) **EP 3 076 680 A1**
(43) Date of publication of application: **05.10.2016**
(21) Application number: 14864134.3
(22) Date of filing: 25.11.2014
(51) Int. Cl.: H04N 21/438

(54) **VIDEO PLAYBACK METHOD, APPARATUS AND INTELLIGENT TERMINAL**

(30) Priority: 25.11.2013 CN 201310608810; 03.09.2014 CN 201410446996
(71) Applicant: Le Shi Zhi Xin Electronic Technology (Tianjin) Limited, Beijing 100025 (CN)
(72) Inventor: HUANG, Peng, Beijing 100025 (CN); TIAN, Jiazi, Beijing 100025 (CN); TONG, Yonghui, Beijing 100025 (CN)
(74) Representative: Viering, Jentschura & Partner mbB Patent- und Rechtsanwälte
(86) International application number: PCT/CN2014/092181
(87) International publication number: WO 2015/074623

(57) **Abstract**

Disclosed are a video playback method, apparatus and intelligent terminal. The method comprises: receiving a video playback request; obtaining a playback initiation control condition and downloading the data to be reproduced according to an address identification of the data to be reproduced which is included in the video playback request and the playback initiation control condition; reproducing the data to be reproduced according to the playback initiation control condition; calculating the time duration of the data having been reproduced among the data to be reproduced; judging whether the time duration of the data having been reproduced among the data to be reproduced is longer than a predetermined playback time duration; if the time duration of the data being reproduced among the data to be reproduced is longer than the predetermined playback time duration, obtaining a playback control condition and downloading and reproducing the remaining data to be reproduced according to the playback control condition. By adjusting the playback initiation control condition and the playback control condition respectively, the present invention can not only avoid video buffering once the image is displayed in the circumstance of ensuring a fast video playback initiation, but also ensure a more reasonable buffering time after normal playback.

## Description

### CROSS-REFERENCE

This application is based upon Chinese Patent Application 201310608810.0, titled "Multimedia Data Caching Method and Apparatus for Smart TV", filed on November 25, 2013 and Chinese Patent Application 201410446996.9, titled "Video Playback Method, Apparatus and Intelligent Terminal", filed on September 3, 2014, the entire contents of which are incorporated herein by reference.

### TECHNICAL FIELD

The present application relates to the field of media playing technologies, and more particularly, to a video playing method, a video playing apparatus and an intelligent terminal.

### BACKGROUND

When playing a network video, a media player downloads the original data of the video through a given network video address (URI, Uniform Resource Identifier); and it starts parsing the data, separates original audio and video data, decodes the audio and video respectively, and then outputs sounds and images when buffer conditions are satisfied.

The current network media player has the defects that: before playing a video, the size of a buffer zone needs to be pre-configured; no matter how big the buffer zone is, the media player could only passively wait for the completion of the buffer and then play the video. Therefore, the playing speed of the current media player depends on the completion speed of buffer during network playing. When the preset buffer zone is large or the network speed is slow, a long waiting time may cause a poor user experience.

### SUMMARY

The embodiments of the present application provide a video playing method, a video playing apparatus and an intelligent terminal which are used to solve the problem of poor user experience caused by the too long waiting time of the current media player when the buffer zone is large or the network transmission conditions are poor.

In order to fulfill the foregoing objects, the embodiments of the present disclosure employ the following technical solutions:
According to a first aspect, it provides a video playing method, including: receiving a video playback request, which includes an address identifier of data to be reproduced; acquiring a playback initiation control condition, and downloading the data to be reproduced according to the address identifier of the data to be reproduced and the playback initiation control condition; playing the data to be reproduced according to the playback initiation control condition; calculating the played duration of the data to be reproduced; and judging whether the played duration of the data to be reproduced is greater than a preset playing duration, if yes, acquiring a control condition for playing, and downloading and playing the remaining data to be reproduced according to the control condition for playing.

According to a second aspect, there is provided a computer-readable record medium recording a program used to execute the video playing method above.

According to a third aspect, there is provided a video playing apparatus, including: a playing request acquisition unit used to receive a video playback request, the video playback request including an address identifier of data to be reproduced; a data downloading unit used to acquire a playback initiation control condition, and download the data to be reproduced according to the address identifier of the data to be reproduced and the playback initiation control condition; a control unit for prepare-playing used to play the data to be reproduced which is downloaded by the data downloading unit according to the playback initiation control condition; a timer used to calculate the played duration of the data to be reproduced; and a playing control unit used to judge whether the played duration of the data to be reproduced acquired by the timer is greater than a preset playing duration; and when the played duration of the data to be reproduced is greater than the preset playing duration, acquire a control condition for playing, and download and play the remaining data to be reproduced according to the control condition for playing.

According to a fourth aspect, there is provided an intelligent terminal including the foregoing video playing apparatus.

### BRIEF DESCRIPTION OF THE DRAWINGS

Fig. 1 is a flow chart of a first embodiment of video playing method according to the present invention;
Fig. 2 is a flow chart of a second embodiment of video playing method according to the present invention;
Fig. 3 is a schematic diagram showing a relationship between buffer zone playing condition parameters involved in the method embodiment as shown in Fig. 2;
Fig. 4 is a sequence chart for executing an information transfer process between parts included in the system according to the method embodiment as shown in Fig. 2;
Fig. 5 is a flow chart of a third embodiment of video playing method according to the present invention;
Fig. 6 is a flow chart of a fourth embodiment of video playing method according to the present invention;
Fig. 7 is a flow chart of a fifth embodiment of video playing method according to the present invention;
Fig. 8 is a structure diagram of an embodiment of video playing apparatus of the present invention; and
Fig. 9 is a structure diagram of another embodiment of video playing apparatus of the present invention.

### PREFERRED EMBODIMENTS

The implementation manners of the present application will be explained in details with reference to the drawings and embodiments hereinafter, so that the realization process of how to solve the technical problems by using a technical means and achieve the technical effect can be sufficiently understood and implemented accordingly.

### Method embodiment:

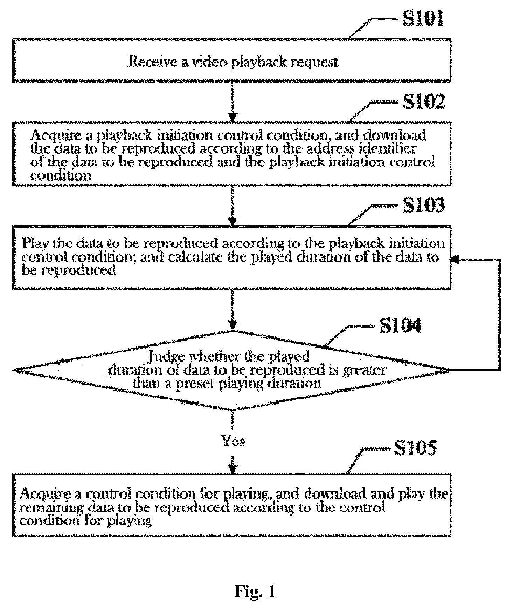

Fig. 1 shows a flow of a first embodiment of video playing method according to the present application, wherein the preferred method embodiment includes the following steps:
In step S101, a video playback request is received.

In the preferred embodiment, the video playback request includes an address identifier of data to be reproduced.

In step S102, a playback initiation control condition is acquired, and the data to be reproduced is downloaded according to the address identifier of the data to be reproduced and the playback initiation control condition.

In the preferred embodiment, the playback initiation control condition is used to indicate a data volume of the data to be reproduced which needs to be downloaded and used for prepare-playing as well as a control condition during the process of prepare-playing.

The playback initiation control condition may be either preset according to the requirements or dynamically set according to a network environment. The setting principle is as follows: in the circumstance of ensuring the video capable of fast prepare-playing, the circumstance of buffering is avoided from occurring once the image is displayed, which ensures the buffer time is more reasonable after normal playback, and may effectively avoid a problem that the user may wait for too long time when the network condition is worse.

In order to improve the playing efficiency, and reduce the user's waiting time (including the prepare-playing time and the waiting time during the playing process), the present application preferably employs an asynchronous downloading mode for the data downloading process.

In the further preferred embodiment of the method embodiment, the playback initiation control condition includes the time threshold for prepare-playing; the method for downloading the data to be reproduced according to the address identifier of the data to be reproduced and the playback initiation control condition specifically includes: calculating the data volume of the data to be reproduced for prepare-playing according to the time threshold for prepare-playing; then downloading the data to be reproduced for prepare-playing according to the data volume of the data to be reproduced for prepare-playing and the address identifier.

Wherein, the above data volume of the data to be reproduced for prepare-playing may be calculated by employing the following method:
The data volume of the data to be reproduced for prepare-playing is equal to the time threshold for prepare-playing multiplying by the bit rate of the video to be played.

In step S103, the data to be reproduced is played according to the playback initiation control condition; and the played duration of the data to be reproduced is calculated.

In step S104, whether the played duration of the data to be reproduced is greater than a preset playing duration is judged; if yes, step S105 is to be proceeded; otherwise, step S103 is to be proceeded to continue to play the data to be reproduced.

The preset playing duration in the embodiment refers to a judging condition of the system from the prepare-playing state to the normal playing state. As a general rule, when the time threshold for prepare-playing (Prepare-Buffer-Duration) is employed as the playback initiation control condition, the preset playing duration may either be an artificial experience setting value, or be set as the difference between the Prepare-Buffer-Duration and the minimum time threshold for playing (Min-Buffer-Duration), or be directly set as the time threshold for prepare-playing (Prepare-Buffer-Duration).

In step S105, a control condition for playing is acquired, and the remaining data to be reproduced in the buffer zone is downloaded and played according to the control condition for playing.

In the preferred embodiment, the control condition for playing may be either preset according to the requirements, or set according to the network environment dynamically; when the control condition for playing employs the mode of presetting, the control condition for playing in step S105 may be either acquired with the playback initiation control condition in step S102 at the same time, or acquired after prepare-playing; when the control condition for playing employs the mode of dynamically setting, the control condition for playing in step S105 is preferably acquired after prepare-playing.

The preferred embodiment may effectively avoid from the condition of buffering occurring once the image is displayed in the circumstance of ensuring prepare-playing as soon as possible by setting the control condition for playing and the playback initiation control condition respectively. Therefore, when the preset buffer zone is large or the network speed is low, the poor user experience of too long waiting time that happens in the current player may be solved better.

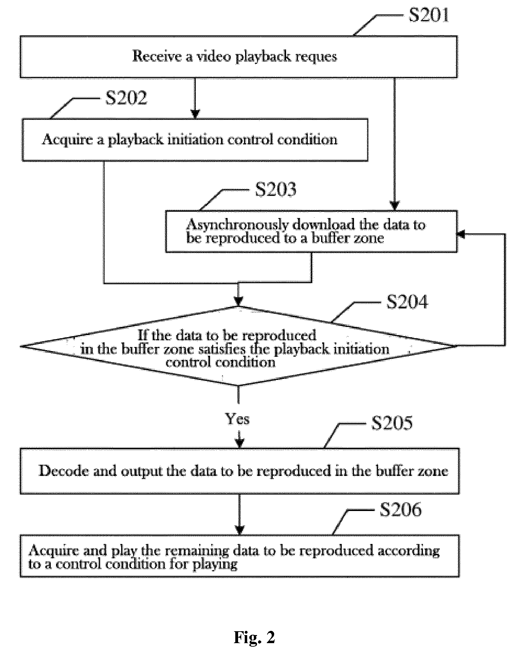

Fig. 2 shows the flow of the second embodiment of the video playing method in the present application. In the preferred embodiment, the time threshold for prepare-playing (Prepare-Buffer-Duration) and the minimum time threshold for prepare-playing are employed as the playback initiation control condition to control the video prepare-playing process. Employing the minimum time threshold for playing (Min-Buffer-Duration) and the maximum time threshold for playing (Max-Buffer-Duration) as the control condition for playing to control the video playing process specifically includes the following steps after prepare-playing:
In step S201: a video playback request including the address identifier of the data to be reproduced is received.

In the preferred embodiment, in order to process the downloading and playing procedure asynchronously more conveniently, the system (or apparatus) performing the method is provided with an upper layer player and a lower layer player. The lower layer player has two types, including NuPlayer in charge of live playing and StagefrightPlayer in charge of on-demand, both of which employ the same buffer technology. The upper layer player analyzes and determines the type of the data to be reproduced according to the address of the data to be reproduced. For the type of live playing, NuPlayer is selected as the lower layer player and instantiated; and for the type of on-demand, StagefrightPlayer is selected as the lower layer player and instantiated. Other modules remain unchanged.

In step S202, the playback initiation control condition is acquired.

In the method embodiment, the time threshold for prepare-playing (Prepare_Buffer_Duration) and the minimum time threshold for prepare-playing (Low_WaterMark_Duration) are taken as the playback initiation control condition. The function range of the playback initiation control condition is merely before prepare-playing, and after prepare-playing, the playing is controlled according to the control condition for playing.

Taking an Android system platform for example, the upper layer player may set the playback initiation control condition acquired to the lower layer player by the following commands:
setParameter(9500, Prepare-Buffer-Duration);
setParameter(9501, Low_WaterMark_Duration);

In the above commands, 9500 and 9501 are communication codes appointed by an upper layer playing unit and a lower layer playing unit.

The function of Prepare-Buffer-Duration is to notify the lower layer player the amount of data needed to be buffered according to the demand of the playback duration, and the lower layer player calculates how large the buffered data volume is according to this duration. In order to enable the image to be displayed as soon as possible and the buffer situation will not occur at once after prepare-playing, a Prepare-Buffer-Duration value that is not too small or not too big needs to be set; if the value is too small, the buffer situation occurs at once after prepare-playing, so that the user's experience is poor; and if the value is too big, prepare-playing can be performed to show the image for a long time, so that the user's experience is also poor.

For instance, if the Prepare-Buffer-Duration is defined to equal to 1.5s, the lower layer player calculates the data of 1.5s buffer by the bit rate of the channel to be played; if the bit rate of the channel is 1000KB, the data volume needing to be buffered (i.e., the data volume of the data to be reproduced for prepare-playing) is 1000KB*1.5s=1500KB. 0.75s is needed to finish buffering in a bandwidth with the network speed of 2M/s theoretically.

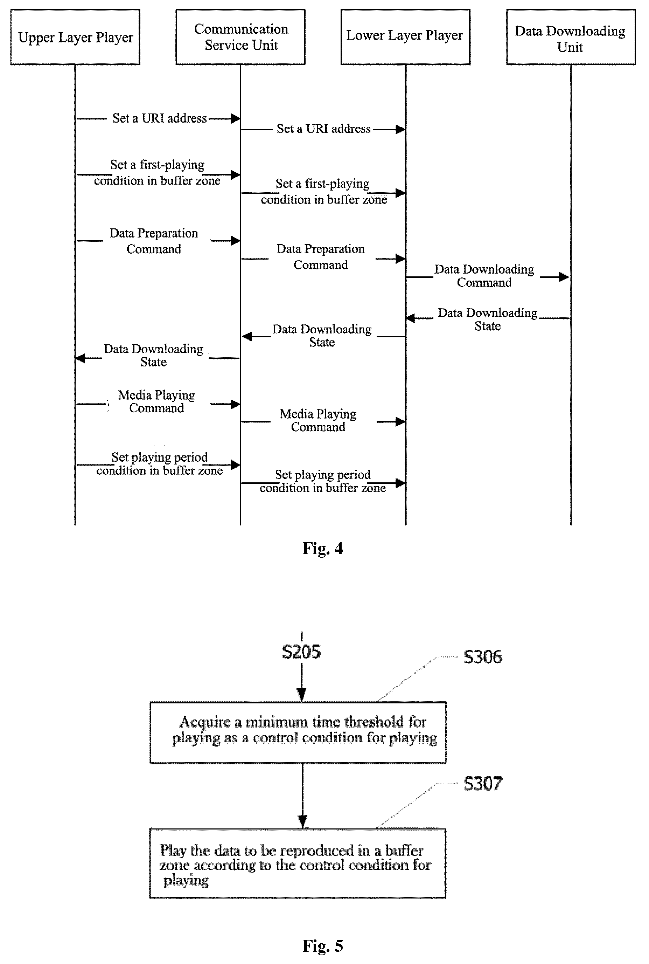

The above Low_WaterMark_Duration (the minimum time threshold for prepare-playing) is used to set a low threshold in a playing buffer pool. In the case of a lower value than threshold, the player pauses playing to enable the upper layer player in a loading state. An object to set the threshold before prepare-playing is to ensure the value of the Low_WaterMark_Duration is less than the value set by the Prepare-Buffer-Duration and greater than the actual playable time (as shown in Fig. 4), so as to ensure a fast playing as well as the circumstance that the buffering happens will not occur once the image is displayed when prepare-playing. Generally, the threshold set by the Low_WaterMark_Duration is relatively low, which may be merely hundreds of milliseconds, while the value of the Prepare-Buffer-Duration may be several seconds. For instance, if the Low_WaterMark_Duration is defined as 200ms, the bit rate of the channel is assumed as 1000KB, and playing may be paused if the data volume of the buffer zone is less than the size of (200ms/1000)*1000KB/s=200KB.

In step S203: the data to be reproduced is asynchronously downloaded according to the address identifier of the data to be reproduced.

Taking the Android system for example, the upper layer player sends a prepare command prepareAsync(), and the lower layer player receives the command, downloads the data to be reproduced according to the buffer condition (condition for prepare-playing) set above and buffers them into the buffer zone. After buffering the data and initializing some other data, the lower layer player notifies the upper layer player of being in the state of playing through the command onPrepared().

In step S204, whether the volume of the data to be reproduced in the buffer zone satisfies the time threshold for prepare-playing is judged; if yes, step S205 is to be proceeded to start playing the data to be reproduced in the buffer zone, and step S206 is to be proceeded to perform the subsequent playing control process; otherwise, step S204 is to be proceeded to wait for the feedback result of step S203.

In step S205: the data to be reproduced in the buffer zone is decoded and output.

In the situation of satisfying the playing condition, the upper layer player sends a playing command start(). At this time, the lower layer player enters the playing state, starts separating the audio data from the video data, decodes and makes the audio-video synchronization, and outputs the audio-video.

In the further preferred embodiment, in order to avoid abnormal playing problem caused by that the data in the buffer zone reaches or is less than the actual playable time, after prepare-playing, it further includes the following steps: judging whether the volume of the remaining data to be reproduced in the buffer zone is less than the minimum time threshold for prepare-playing, which is Low_WaterMark_Duration; if yes, pausing the decoding and outputting process of the data to be reproduced.

In step S206, the minimum time threshold for playing and the maximum time threshold for playing are acquired as the control condition for playing.

In step S207, the data to be reproduced in the buffer zone is played according to the control condition for playing.

After starting playing, the playing condition of the buffer zone is started to be set for the second time to ensure the reasonable buffer time after normal playing. The control condition for playing includes the minimum time threshold for playing (Min-Buffer-Duration) and the maximum time threshold for playing (Max-Buffer-Duration).

Taking the Android system platform for example, the upper layer player may set the control condition for playing acquired to the lower layer player by the following commands.
setParameter(9501,Min-Buffer-Duration);
setParameter(9502,Max-Buffer-Duration);

In the above commands, 9501 and 9502 are communication codes appointed by an upper layer playing unit and a lower layer playing unit.

For instance, the time set by the Prepare-Buffer-Duration is 1s, and then the timer will reset the volume of the buffer zone after 1s. The minimum time threshold for playing Min-Buffer-Duration and the maximum time threshold for playing Max-Buffer-Duration are matched for use. The minimum time threshold for playing Min-Buffer-Duration is greater than the actual playable time, and less than the maximum time threshold for playing Max-Buffer-Duration. When the expected playing time of the remaining data in the buffer zone is less than the time defined by the Min-Buffer-Duration, playing is paused. When the playing time of the remaining data in the buffer zone is greater than the Max-Buffer-Duration, the buffer is paused to save the network data of bandwidth for the request of the other applications of the device.

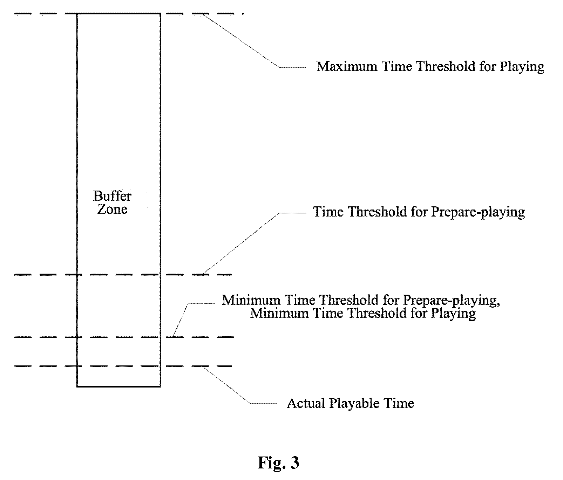

Fig. 3 shows the relationship among the related time threshold for prepare-playing, the minimum time threshold for prepare-playing, the minimum time threshold for playing, the maximum time threshold for playing, the actual playable time and the other condition parameters, wherein:
Maximum time threshold for playing>time threshold for prepare-playing≥ minimum time threshold for playing≥ minimum time threshold for prepare-playing≥ actual playable time.

The above actual playable time refers to the time capable of playing the video theoretically. When the data volume in the buffer zone merely satisfies the actual playable time, if a new data may not be acquired at the moment of playing, the playing process will be forced to stop/pause, and it also may cause other abnormal problem of playing.

In addition, the setting of the above condition parameter is related to the network environment. As a general rule, the time threshold for prepare-playing is slightly greater than the minimum time threshold for prepare-playing; when the network speed is faster (the network downloading speed is not less than the video playing speed), the time threshold for prepare-playing may be set as a relatively small value, which is generally equal to the minimum time threshold for prepare-playing, the minimum time threshold for playing and the actual playable time in order to perform prepare-playing as soon as possible and reduce the user's waiting time; when the network speed is relatively slow, the time threshold for prepare-playing may be set as a relatively greater value in order to reduce the pause time, wherein the time threshold for prepare-playing > the minimum time threshold for playing > the minimum time threshold for prepare-playing > the actual playable time.

It should be noted that, the parameters of the playback initiation control condition and the control condition for playing may be given by those skilled in the art according to various network conditions and experiences thereof, and the volume of the buffer zone may also be calculated by automatically testing the current network environment, and the type and volume of the video to be played through a program, so as to make network playing more fluent.

Fig. 4 shows a sequence chart for executing an information transfer process between parts included in the system according to the second method embodiment, with the specific description as follows.

Firstly, after receiving a media playing request, the upper layer player transfers the address identifier of the data to be reproduced to the lower layer playing unit through a communication service unit.

Secondly, the upper layer player sets the parameter of playback initiation control condition of the lower layer player through the communication service unit.

The playback initiation control condition includes the time threshold for prepare-playing Prepare-Buffer-Duration. The function of the Prepare-Buffer-Duration is to tell the lower layer playing unit the amount of data needed to be buffered according to the demand of the playback duration. The function range of this setting is merely before prepare-playing, and the control for playing is performed according to the volume of the buffer zone additionally set subsequently after prepare-playing.

Thirdly, the upper layer player sends an asynchronous data downloading instruction to the lower layer player through the communication service unit, and then the lower layer player sends an asynchronous data downloading request to the data downloading unit.

Fourthly, the data downloading unit feeds back downloading state information to the lower layer player, and the lower layer player judges whether to start playing according to the parameter of the buffer zone, and the state information is fed back to the upper layer player through the communication service unit if permitted.

Fifthly, the upper layer player sends the video playing instruction to the lower layer player through the communication service unit.

Sixthly, the upper layer player sets the control condition for playing of the lower layer player through the communication service unit after prepare-playing.

Wherein, the parameter of the above control condition for playing includes the minimum time threshold for playing Min-Buffer-Duration and the maximum time threshold for playing Max-Buffer-Duration. When the video data time in the buffer zone is less than the Min-Buffer-Duration, the video playing process is paused by the lower layer player until the data in the buffer zone downloaded by the data downloading unit may satisfy the playing requirements. When the video data time in the buffer zone is greater than the Max-Buffer-Duration, the data downloading process is paused by the data downloading unit, so as to save the network bandwidth for the request of the other applications of the device.

The foregoing various method embodiments are described as a series of action combination in order to describe simply. However, those skilled in the art should know that the present application is not limited by the action sequence described as some steps may employ the other sequences or be performed at the same time according to the present application; secondly, those skilled in the art should also know that the foregoing embodiments shall fall within the preferred embodiments, and the related actions and modules may not be necessary in the present application.

Fig. 5 shows the flow of the third embodiment of the video playing method in the present application. In the preferred embodiment, the time threshold for prepare-playing (Prepare-Buffer-Duration) and the minimum time threshold for prepare-playing are employed as the playback initiation control condition to control the video prepare-playing process. Employing the minimum time threshold for playing (Min-Buffer-Duration) as the control condition for playing to control the video playing process after prepare-playing specifically includes the following steps, based on the flow in Fig. 2 after step S205 and parallel to step S206.

In step S306: the minimum time threshold for playing is acquired as the control condition for playing.

In step S307, the data to be reproduced in the buffer zone is played according to the control condition for playing.

After starting playing, the playing condition of the buffer zone is started to be set for the second time to ensure the reasonable buffer time after normal playing. The control condition for playing includes the minimum time threshold for playing (Min-Buffer-Duration).

Taking the Android system platform for example, the upper layer player may set the control condition for playing acquired to the lower layer player by the following command.
setParameter(9501,Min-Buffer-Duration);

In the above command, 9501 is the communication code appointed by an upper layer playing unit and a lower layer playing unit.

For instance, the time set by the Prepare-Buffer-Duration is 1s, and then the timer will reset the volume of the buffer zone after 1s. The minimum time threshold for playing (Min-Buffer-Duration) is greater than the actual playable time. When the predicted playing time of the remaining data in the buffer is less than the time defined by the Min-Buffer-Duration, it indicates that the data in the buffer zone may not be kept buffering as well as playing, and the playing needs to be paused to continue to buffer. When the playable time of the remaining data in the buffer is greater than the time defined by the Min-Buffer-Duration, it indicates that the data in the buffer zone may be kept buffering as well as playing, and the playing is continued and the buffering is continued as well.

In this way, it may also determine whether to keep playing according to whether the playing duration of the data in the buffer zone satisfies the minimum time threshold for playing in case of high bit rate data, which does not result in lags due to the increase in the data volume in the unit playing time frequently happening .That is, the normal playing time between lags does not become shorter following the increase in the video bit rate, which may avoid frequently interrupting the watching process of the user.

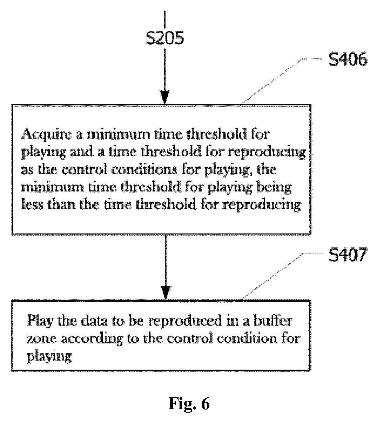

Fig. 6 shows the flow of the fourth embodiment of the video playing method in the present application. In the preferred embodiment, the time threshold for prepare-playing (Prepare-Buffer-Duration) and the minimum time threshold for prepare-playing are employed as the playback initiation control condition to control the video prepare-playing process. Employing the minimum time threshold for playing (Min-Buffer-Duration) and the time threshold for reproducing as the control condition for playing to control the video playing process after prepare-playing specifically includes the following steps, based on the flow in Fig. 2 after step S205 and parallel to step S206.

In step S406: the minimum time threshold for playing and the time threshold for reproducing are acquired as the control condition for playing, and the minimum time threshold for playing is less than the time threshold for reproducing.

In step S407, the data to be reproduced in the buffer zone is played according to the control condition for playing.

After starting playing, the playing condition of the buffer zone is started to be reset to ensure the reasonable buffer time after normal playing. The control condition for playing includes the minimum time threshold for playing (Min-Buffer-Duration) and the time threshold for reproducing (Re-Buffer-Duration).

Taking the Android system platform for example, the upper layer player may set the control condition for playing acquired to the lower layer player by the following commands.
setParameter(9501,Min-Buffer-Duration);
setParameter(9503,Re-Buffer-Duration);

In the above commands, 9501 and 9053 are the communication codes appointed by an upper layer playing unit and a lower layer playing unit.

For instance, the time set by the Prepare-Buffer-Duration is 1s, and then the timer will reset the volume of the buffer zone after 1s. The minimum time threshold for playing Min-Buffer-Duration and the time threshold for reproducing Re-Buffer-Duration are matched for use. The minimum time threshold for playing Min-Buffer-Duration is greater than the actual playable time, and less than the time threshold for reproducing Re-Buffer-Duration. When the playable time of the remaining data in the buffer is greater than the Min-Buffer-Duration, it indicates that the data in the buffer zone may be kept buffering as playing, and the playing is continued and the buffering is continued as well. When the predicted playing time of the remaining data in the buffer is less than the time defined by the Min-Buffer-Duration, it indicates that the data in the buffer zone may not be kept buffering as playing, and the playing needs to be paused to continue to buffer. When the playing is paused and the buffer is continued, the data volume in the buffer zone is gradually increased due to continuous downloading. The playable duration of the data volume in the buffer zone needs to be continuously re-determined at this moment. When the playable duration of the data volume in the buffer zone is greater than or equal to the Re-Buffer-Duration, it indicates the data volume downloaded in the buffer zone at this moment is enough, which may support the continuously playing, so that the playing continues and the buffer continues at the same time.

It should be noted here that if the playing of the data is not paused for any time, it indicates that the network condition is kept stable and it is enough to balance the data volume in the buffer zone by the minimum time threshold for playing. Buffering as playing may be completely kept as long as the data volume in the buffer zone is greater than or equal to the minimum time threshold for playing. However, if the playing of the data is paused, it indicates the network bandwidth becomes worse suddenly and the network condition is instable, so that the standard for resuming the playing of data should be increased, otherwise, multiple lags resulting in pausing may happen. In this way, in order that the data in the buffer zone cannot be read quickly after resuming the playing of data to cause the lag again, the time threshold for reproducing may be set greater than the minimum time threshold for playing, which may enable the duration capable of at least continuously playing the data in the buffer zone to be equal to the difference value between the time threshold for reproducing and the minimum time threshold for playing.

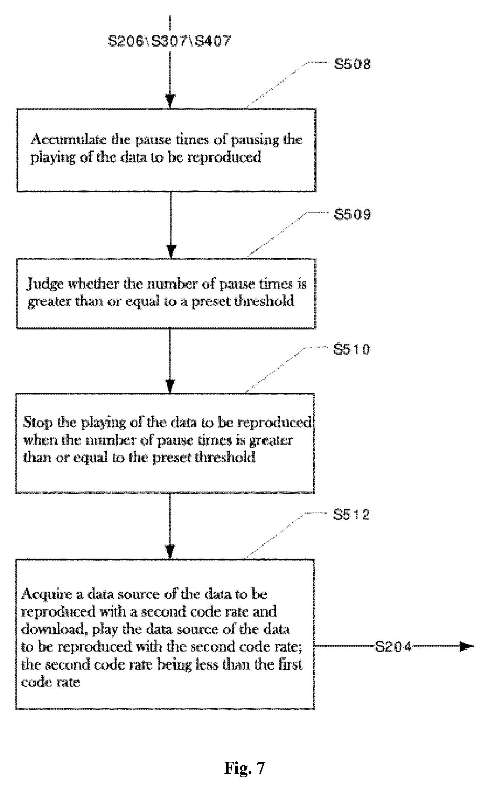

Fig. 7 shows a flow of the fifth embodiment of a video playing method according to the present application. In step S206, step S307 or step S407, playing is paused due to insufficient data volume in the buffer zone. Therefore, the situation of pausing the playing for multiple times should also be controlled. The method further includes the following steps after step S206, step 307 or step S407 based on the flow in Fig. 2, Fig. 5 or Fig. 6.

In step S508: the pause times for pausing the playing of the data to be reproduced are accumulated.

In step S509: whether the number of pause times is greater than or equal to the preset threshold is judged.

In step S510, when the number of pause times is greater than or equal to the preset threshold, the playing of the data to be reproduced is paused.

When there are too many pause times for the playing of the data in the buffer zone, that is, the there are too many lags, which indicates the network environment at this moment is insufficient to keep buffering as well as playing, or even it is insufficient to support the normal playing of the data, and the playing of the data needs to be paused.

In step S510, before pausing the playing of the data to be reproduced, the bit rate of the data to be reproduced needs to be acquired as a first bit rate.

Usually, after a user plays a multimedia data on demand and before the data is played at the client, the user or a server is requested to determine one bit rate matched with an initial network bandwidth from the data source with several different corresponding bit rates provided by the server according to the initial network bandwidth before playing, that is, the first bit rate in the embodiments of the present application.

While after determining the multimedia data with the first bit rate needs to be played, the client may request for the data source with the first bit rate of the multimedia data from the server, and the server responds to the request of the client and sends a first address of the data source storing the multimedia data to the client. The first address herein is corresponding to the first bit rate of the multimedia data. At this moment, the client is linked to the first address to download or buffer the data source of the first address, that is, capable of starting playing the multimedia data with the first bit rate.

The measurement of the initial network bandwidth herein may be implemented by mutually sending messages between the client and the server and measuring the sending speed of the message; a certain amount of data may also be unloaded or downloaded, the uploading or downloading time of the data is measured and the data volume uploaded or downloaded in unit time is calculated as the initial network bandwidth. Any limitation on the method for measuring the initial network bandwidth is not performed by the embodiments of the present application.

In step S512, a data source of the data to be reproduced with a second bit rate is acquired and downloaded, and the data source of the data to be reproduced with the second bit rate is played. The second bit rate is less than the first bit rate.

The bit rate of the data herein may be divided into multiple levels, for instance, the second bit rate may be corresponding to 720P, and the first bit rate may be corresponding to 1080P. But when the data source with the first bit rate may not keep normal playing, it indicates the condition of the network bandwidth has become worse, which greatly affects the current playing, and it is more suitable for converting the currently played data source with the first bit rate into the data source with the second bit rate matched with the current network bandwidth to play.

In the embodiment of the present application, when there are too many pauses for the playing of the data, that is, when there are too many lags, the network environment at this moment is insufficient to keep the normal playing of the current data with the first bit rate by periodically measuring the average network bandwidth within the preset time period. The current data with the data with the first bit rate is stopped to be read from the buffer zone at this moment, that is, the playing of the current data with the first bit rate is paused, then the data source of the data with the second bit rate is acquired from the server, and the data with the second bit rate is downloaded from the server and stored in the buffer zone, so as to convert to the data source with the second bit rate.

Step S204 is to be proceeded, that is, whether the playable duration of the data volume of the second bit rate stored in the buffer zone satisfies the time threshold for prepare-playing is detected and the following operation is performed. The second bit rate is set less than the first bit rate, the smooth playing of the multimedia data may be realized in a worse network environment, that is to say, during the process of playing the multimedia data, if the condition of the network bandwidth becomes worse, the data with the low bit rate matched with the worse network bandwidth may be automatically switched for playing, which solves the lag problems when watching TV programs.

### Apparatus embodiment:

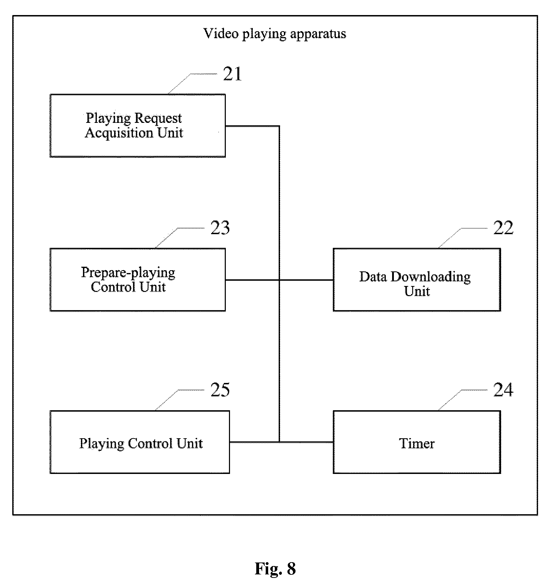

Fig. 8 shows a structure diagram of an embodiment of video playing apparatus of the present application, which includes a playing request acquisition unit 21, a data downloading unit 22, a prepare-playing control unit 23, a timer 24 and a playing control unit 25, wherein:
the playing request acquisition unit 21 is used to receive a video playback request including an address identifier of data to be reproduced;
a data downloading unit 22 is used to acquire a playback initiation control condition, and download the data to be reproduced according to the address identifier of the data to be reproduced which is acquired by the playing request acquisition unit 21 and playback initiation control condition; in order to improve the system operating efficiency, the data downloading unit 22 preferably downloads the data to be reproduced in an asynchronous mode; and
the control unit for prepare-playing 23 is used to play the data to be reproduced which is downloaded into a buffer zone by the data downloading unit 22 according to the playback initiation control condition acquired by the data downloading unit 22.

In further apparatus embodiment, the playback initiation control condition includes a time threshold for prepare-playing, and the data downloading unit 23 particularly includes a data volume calculation subunit 23-1 and a downloading subunit 23-2, wherein:
the data volume calculation subunit 23-1 is used to calculate a data volume of the data to be reproduced which is used for prepare-playing according to the time threshold for prepare-playing; and
the downloading subunit 23-2 is used to download the data to be reproduced which is used for prepare-playing according to the data volume and address identifier of the data to be reproduced which is used for prepare-playing.

In another further apparatus embodiment, the playback initiation control condition includes a time threshold for prepare-playing and a minimum time threshold for prepare-playing, and the minimum time threshold for playing is less than the time threshold for prepare-playing; the control unit for prepare-playing 23 is used to judge whether the playable duration of the data volume of the downloaded data to be reproduced is greater than the minimum time threshold for prepare-playing; if not, pause the playing of the data to be reproduced, and continue the downloading process of the data to be reproduced.

The timer 24 is used to calculate the played duration of the data to be reproduced; and
the playing control unit 25 is used to judge whether the played duration of the data to be reproduced which is acquired by the timer 24 is greater than a preset playing duration; and when the played duration of the data to be reproduced is greater than a preset playing duration, acquire the control condition for playing, and download the remaining data to be reproduced according to the control condition for playing.

To be specific, in a further apparatus embodiment, the playing control unit 25 may include three structures and functions.
1) the playing control unit 25 particularly includes:
   a control condition conversion subunit 25-1 used to judge whether the played duration of the data to be reproduced which is acquired by the timer 24 is greater than a preset playing duration, schedule a playing condition acquisition subunit 25-2 to acquire a control condition for playing when the played duration of the data to be reproduced is greater than the preset playing duration, and schedule a process control subunit 25-3 to play the remaining data to be reproduced according to the control condition for playing;
   the playing condition acquisition subunit 25-2 used to acquire a control condition for playing, wherein the control condition for playing includes a minimum time threshold for playing; and
   the process control subunit 25-3 used to control the playing and downloading process of the remaining data to be reproduced, wherein when the playable duration of the data to be reproduced which is downloaded but not played is less than the minimum time threshold for playing, the playing of the data to be reproduced is paused, and the data downloading unit is waited to continuously download the data to be reproduced;
   and when the playable duration of the data to be reproduced which is downloaded but not played is greater than or equal to the minimum time threshold for playing, the data to be reproduced is continuously played, and the data downloading unit 23 is waited to continuously download the data to be reproduced.
2) The playing control unit 25 may also particularly inlude:
   a control condition conversion subunit 25-1 used to judge whether the played duration of the data to be reproduced which is acquired by the timer 24 is greater than a preset playing duration, schedule a playing condition acquisition subunit 25-2 to acquire a control condition for playing when the played duration of the data to be reproduced is greater than the preset playing duration, and schedule a process control subunit 25-3 to play the remaining data to be reproduced according to the control condition for playing;
   the playing condition acquisition subunit 25-2 used to acquire a control condition for playing, wherein the control condition for playing includes a minimum time threshold for playing and a time threshold for reproducing, and the minimum time threshold for playing is less than the time threshold for reproducing; and
   the process control subunit 25-3 is also used to control the playing and downloading process of the remaining data to be reproduced, wherein the playable duration of the data to be reproduced which is not played is re-determined according to the data volume of the data to be reproduced that is continuously downloaded by the data downloading unit 23 while pausing the playing of the data to be reproduced and waiting the data downloading unit to continuously download the data to be reproduced; and when the playable duration of the data to be reproduced which is not played is re-determined to be greater than or equal to the time threshold for reproducing, the data to be reproduced is continuously played and the data downloading unit 23 is waited to continuously download the data to be reproduced.
3) The playing control unit 25 may also particularly inlude:
   a control condition conversion subunit 25-1 used to judge whether the played duration of the data to be reproduced which is acquired by the timer 24 is greater than a preset playing duration, schedule a playing condition acquisition subunit 25-2 to acquire a control condition for playing when the played duration of the data to be reproduced is greater than the preset playing duration, and schedule a process control subunit 25-3 to play the remaining data to be reproduced according to the control condition for playing;
   the playing condition acquisition subunit 25-2 used to acquire a control condition for playing, wherein the control condition for playing includes a minimum time threshold for playing and a maximum time threshold for playing, and the minimum time threshold for playing is less than the maximum time threshold for playing; and
   the process control subunit 25-3 used to control the playing and downloading process of the remaining data to be reproduced, wherein when the playable duration of the data to be reproduced which is downloaded but not played is less than the minimum time threshold for playing, the playing of the foregoing data to be reproduced is paused, and the data downloading unit 22 is waited to continuously download the data to be reproduced; and when the playable duration of the data to be reproduced which is downloaded but not played is greater than or equal to the maximum time threshold for playing, the data to be reproduced is continuously played, and the downloading process of the downloading unit 22 is paused.

In a further preferred embodiment of the present application, the control condition conversion subunit 25-1 and the process control subunit 25-3 in the playing control unit 25 may also perform the following functions:
the control condition conversion subunit 25-1 is also used to accumulate the pause times for pausing the playing of the data to be reproduced; and acquire a bit rate of the data to be reproduced as a first bit rate before pausing the playing of the data to be reproduced; and after the pausing the playing of the data to be reproduced, acquire a data source of the data to be reproduced with a second bit rate, and schedule the data downloading unit to download; and
the process control subunit 25-3 is also used to acquire the times of pause, and stop playing the data to be reproduced when the number of pause times are greater than or equal to a preset threshold; and it is also used to play the data source of the data to be reproduced with a second bit rate, the second bit rate being less than the first bit rate.

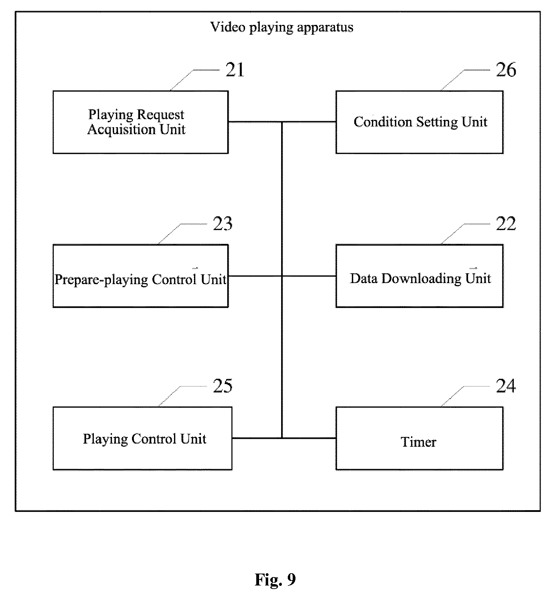

Fig. 9 shows a structure diagram of another embodiment of video playing apparatus of the present application. In one further preferred embodiment of the present application, a condition setting unit 26 is further set for testing the network speed, and dynamically setting the playback initiation control condition and the control condition for playing according to the actual acquired network speed. For instance, when the network speed is faster, the time threshold for prepared-playing may be set as a relatively smaller value; when the network speed is slower, the time threshold for prepared-playing may be set as a relatively larger value, and the minimum time threshold for playing is accordingly increased to be greater than the actual playable time.

In addition, the present application further discloses an intelligent terminal. The intelligent terminal includes the above video playing apparatus. The playback initiation control condition and the control condition for playing of the buffer zone may be dynamically adjusted according to the situation of the network environment. The problem of frequently showing buffer prompts in the playing process may also be avoided to the greatest extend while increasing the first-playing speed. The intelligent terminal provided in the present application may be either a smart TV or a smart phone. The type of the intelligent terminal is not limited in the present application as long as an Android operation system platform is configured.

It should be noted that the above apparatus or system embodiment falls within the preferred embodiment, and the related units and modules are not always necessary for the present application.

It should be finally illustrated that such relationship terms like first and second herein merely distinguish one entity or operation from another entity or operation, but not certainly require or suggest any of the actual relationship or sequence between these entities or operations. Moreover, the terms "include", "comprise" or any variation thereof herein refer to "include but not limited to". Therefore, in the context of a process, method, object or device that includes a series of elements, the process, method, object or device not only includes such elements, but also includes other elements not specified expressly, or may include inherent elements of the process, method, object or device. Unless otherwise specified, in the context of "include a ...", the process, method, object or device that includes or comprises the specified elements may also include other identical elements.

A program recommending method and a program recommending apparatus for a smart TV provided in the present invention is introduced in details above. The principle and the implementing manner of the present application are illustrated by applying a specific example in the context. The description of the embodiment above is merely used for helping understand the method and the core thought thereof of the present application. At the same time, those ordinary skilled in the part may change the detailed description and the application scope according to the thought of the present application. In conclusion, the content of the description shall not be understood as the limit to the present application.

### Industrial Applicability

The playback initiation control condition and the control condition for playing are respectively adjusted by applying the foregoing technical solutions. In the circumstance of ensuring the video capable of fast prepare-playing, the circumstance of buffering is avoided from occurring once the image is displayed to ensure the buffer time is more reasonable after normal playback, so that a problem that the user may be caused for too long waiting time when the network condition is worse may be effectively avoided. Further, by setting the maximum time threshold for playing in the buffer zone, the downloading of the buffering process may be paused when the data in the buffer zone exceeds the threshold to save the network data of bandwidth for the request of the other applications of the device.

## Claims

1. A video playing method, **characterized by** comprising:
receiving a video playback request, the video playback request comprising an address identifier of data to be reproduced;
acquiring a playback initiation control condition, and downloading the data to be reproduced according to the address identifier of the data to be reproduced and the playback initiation control condition;
playing the data to be reproduced according to the playback initiation control condition;
calculating a played duration of the data to be reproduced; and
judging whether the played duration of the data to be reproduced is greater than a preset playing duration, acquiring a control condition for playing if the played duration of the data to be reproduced is greater than the preset playing duration, and downloading and playing the remaining data to be reproduced according to the control condition for playing.

2. The video playing method according to claim 1, **characterized in that**, the playback initiation control condition comprises a time threshold for prepare-playing; and
downloading the data to be reproduced according to the address identifier of the data to be reproduced and the playback initiation control condition comprises:
calculating a data volume of the data to be reproduced which is used for prepare-playing according to the time threshold for prepare-playing; and
downloading the data to be reproduced which is used for prepare-playing according to the data volume and the address identifier of the data to be reproduced which is used for prepare-playing.

3. The video playing method according to claim 1, **characterized in that**, the playback initiation control condition comprises a minimum time threshold for prepare-playing; and
playing the data to be reproduced according to the playback initiation control condition comprises:
judging whether a playable duration of data volume of the downloaded data to be reproduced is greater than the minimum time threshold for prepare-playing; if not, pausing the playing of the data to be reproduced, and continuing a downloading process of the data to be reproduced.

4. The video playing method according to claim 3, **characterized in that**, the minimum time threshold for prepare-playing is less than the time threshold for prepare-playing.

5. The video playing method according to claim 1, **characterized in that**, the control condition for playing comprises a minimum time threshold for playing; and
the method for playing the data to be reproduced according to the control condition for playing particularly comprises:
judging whether a playable duration of data to be reproduced which is downloaded but not played is less than the minimum time threshold for playing; if yes, pausing the playing of the data to be reproduced, and continuing a downloading process of the data to be reproduced; otherwise, continuing the playing of the data to be reproduced, and continuing the downloading process of the data to be reproduced.

6. The video playing method according to claim 5, **characterized in that**, the control condition for playing further comprises a time threshold for reproducing, the minimum time threshold for playing being less than the time threshold for reproducing; and
judging that the playable duration of the data to be reproduced which is downloaded but not played is less than the minimum time threshold for playing, pausing the playing of the data to be reproduced, and continuing the downloading process of the data to be reproduced further comprises:
re-determining a playable duration of data to be reproduced which is not played according to data volume of the constantly downloaded data to be reproduced while continuing the downloading process of the data to be reproduced; and
judging and re-determining whether the playable duration of the data to be reproduced which is not played is greater than or equal to the time threshold for reproducing; if yes, continuing the playing of the data to be reproduced, and continuing the downloading process of the data to be reproduced.

7. The video playing method according to claim 1, **characterized in that**, the control condition for playing comprises a minimum time threshold for playing and a maximum time threshold for playing, the minimum time threshold for playing being less than the maximum time threshold for playing; and
the method for playing the remaining data to be reproduced according to the control condition for playing particularly comprises:
judging whether a playable duration of data to be reproduced which is downloaded but not played is less than the minimum time threshold for playing; if yes, pausing the playing of the data to be reproduced, and continuing a downloading process of the data to be reproduced; and
judging whether the playable duration of the data to be reproduced which is downloaded but not played is greater than or equal to the maximum time threshold for playing; if yes, continuing the playing of the data to be reproduced, and pausing the downloading process of the data to be reproduced.

8. The video playing method according to claim 6 or 7, **characterized by** further comprising: accumulating pause times for pausing the playing of the data to be reproduced;
judging whether the number of pause times is greater than or equal to a preset threshold; and
when the number of pause times is greater than or equal to the preset threshold, stopping playing the data to be reproduced.

9. The video playing method according to claim 8, **characterized by** further comprising:
acquiring a bit rate of the data to be reproduced as a first bit rate before stopping the playing of the data to be reproduced; and
after the stopping of the playing of the data to be reproduced, acquiring and downloading a data source of the data to be reproduced with a second bit rate, and playing the data source of the data to be reproduced with the second bit rate, wherein the second bit rate is less than the first bit rate.

10. The video playing method according to any one of claims 1 to 7, **characterized in that**, the playback initiation control condition and/or the control condition for playing is dynamically set according to an actual network speed.

11. A computer-readable record medium recording a program used to execute the video playing method according to any one of claims 1 to 10.

12. A video playing apparatus, **characterized by** comprising:
a playing request acquisition unit used to receive a video playback request, the video playback request comprising an address identifier of data to be reproduced;
a data downloading unit used to acquire a playback initiation control condition, and download the data to be reproduced according to the address identifier of the data to be reproduced and the playback initiation control condition;
a control unit for prepare-playing used to play the data to be reproduced which is downloaded by the data downloading unit according to the playback initiation control condition;
a timer used to calculate a played duration of the data to be reproduced; and
a playing control unit used to judge whether the played duration of the data to be reproduced acquired by the timer is greater than a preset playing duration; and when the played duration of the data to be reproduced is greater than the preset playing duration, acquire a control condition for playing, and download and play the remaining data to be reproduced according to the control condition for playing.

13. The video playing apparatus according to claim 12, **characterized in that**, the playback initiation control condition comprises a time threshold for prepare-playing;
the data downloading unit comprises a data volume calculation subunit and a downloading subunit;
the data volume calculation subunit is used to calculate a data volume of the data to be reproduced which is used for prepare-playing according to the time threshold for prepare-playing; and
the downloading subunit is used to download the data to be reproduced which is used for prepare-playing according to the data volume and the address identifier of the data to be reproduced which is used for prepare-playing.

14. The video playing apparatus according to claim 12, **characterized in that**, the playback initiation control condition comprises a time threshold for prepare-playing and a minimum time threshold for prepare-playing, wherein the minimum time threshold for prepare-playing is less than the time threshold for prepare-playing; and
the control unit for prepare-playing is used to judge whether a playable duration of data volume of the downloaded data to be reproduced is greater than the minimum time threshold for prepare-playing; if not, pause the playing of the data to be reproduced, and continue a downloading process of the data to be reproduced.

15. The video playing apparatus according to claim 12, **characterized in that**, the playing control unit particularly comprises:
a control condition conversion subunit used to judge whether the played duration of the data to be reproduced which is acquired by the timer is greater than a preset playing duration, schedule a playing condition acquisition subunit to acquire a control condition for playing when the played duration of the data to be reproduced is greater than the preset playing duration, and schedule a process control subunit to play the remaining data to be reproduced according to the control condition for playing;
the playing condition acquisition subunit used to acquire a control condition for playing, wherein the control condition for playing comprises a minimum time threshold for playing; and
the process control subunit used to control a playing and downloading process of the remaining data to be reproduced, wherein, when a playable duration of data to be reproduced which is downloaded but not played is less than the minimum time threshold for playing, the playing of the data to be reproduced is paused, and the data downloading unit is waited to continue with the download of the data to be reproduced; and when the playable duration of the data to be reproduced which is downloaded but not played is greater than or equal to the minimum time threshold for playing, the data to be reproduced is played continuously, and the data downloading unit is waited to continue with the download of the data to be reproduced.

16. The video playing apparatus according to claim 15, **characterized in that**,
the playing condition acquisition subunit is also used to acquire a control condition for playing, wherein the control condition for playing comprises a time threshold for reproducing, and the minimum time threshold for playing is less than the time threshold for reproducing; and
the process control subunit is also used to control the playing and downloading process of the remaining data to be reproduced, wherein a playable duration of data to be reproduced which is not played is re-determined according to a data volume of the data to be reproduced that is continuously downloaded by the data downloading unit while pausing the playing of the data to be reproduced and waiting the data downloading unit to continuously download the data to be reproduced; and when the playable duration of the data to be reproduced which is not played is re-determined to be greater than or equal to the time threshold for reproducing, the data to be reproduced is continuously played and the data downloading unit is waited to continuously download the data to be reproduced.

17. The video playing apparatus according to claim 12, **characterized in that**, the playing control unit particularly comprises:
a control condition conversion subunit used to judge whether the played duration of the data to be reproduced which is acquired by the timer is greater than a preset playing duration, schedule a playing condition acquisition subunit to acquire a control condition for playing when the played duration of the data to be reproduced is greater than the preset playing duration, and schedule a process control subunit to play the remaining data to be reproduced according to the control condition for playing;
a playing condition acquisition subunit used to acquire a control condition for playing, wherein the control condition for playing comprises a minimum time threshold for playing and a maximum time threshold for playing, and the minimum time threshold for playing is less than the maximum time threshold for playing; and
a process control subunit used to control a playing and downloading process of the remaining data to be reproduced, wherein:
when a playable duration of data to be reproduced which is downloaded but not played is less than the minimum time threshold for playing, the playing of the data to be reproduced is paused, and the data downloading unit is waited to continuously download the data to be reproduced; and when the playable duration of the data to be reproduced which is downloaded but not played is greater than or equal to the maximum time threshold for playing, the data to be reproduced is continuously played, and a downloading process of the data downloading unit is paused.

18. The video playing apparatus according to claim 16 or 17, **characterized in that**,
the control condition conversion subunit is also used to accumulate pause times for pausing the playing of the data to be reproduced; and
the process control subunit is also used to acquire the pause times, and stop playing the data to be reproduced when the number of pause times is greater than or equal to the preset threshold.

19. The video playing apparatus according to claim 18, **characterized in that**,
the control condition conversion subunit is also used to acquire a bit rate of the data to be reproduced as a first bit rate before stopping the playing of the data to be reproduced; and after the stopping the playing of the data to be reproduced, acquire a data source of the data to be reproduced with a second bit rate, and schedule the data downloading unit to download; and
the process control subunit is also used to play the data source of the data to be reproduced with the second bit rate, the second bit rate being less than the first bit rate.

20. The video playing apparatus according to any one of claims 12 to 17, **characterized in that**, the playback initiation control condition and/or the control condition for playing is dynamically set according to an actual network speed.

21. An intelligent terminal, **characterized by** comprising the video playing apparatus according to any one of claims 12 to 20.
